# EUROPEAN PATENT APPLICATION

(11) **EP 1 176 837 A1**
(43) Date of publication of application: **30.01.2002**
(21) Application number: 00917351.9
(22) Date of filing: 18.04.2000
(51) Int. Cl.: H04Q 3/42, H04M 3/00

(54) **FIBER-OPTIC SUBSCRIBER TRANSMISSION SYSTEM**

(30) Priority: 19.04.1999 JP 11141799
(71) Applicant: NEC Corporation, Minato-ku, Tokyo 108-8001 (JP)
(72) Inventor: SHIBUTANI, Makoto, Tokyo 108-8001 (JP)
(74) Representative: Glawe, Delfs, Moll & Partner
(86) International application number: JP0002532
(87) International publication number: WO0064196

(57) **Abstract**

A subscriber optical fiber transmission system for easily accommodating a plurality of digital subscriber line signals and telephone signals is achieved.

A plurality of subscriber premises and a remote node are connected to each other via telephone lines, and the remote node and terminal stations are connected to each other via optical fibers. In the remote mode, subscriber signal sent via the telephone line from each subscriber is converted to digital signal by A/D conversion. Further, in the remote node, these digital signals are time-division multiplexed to convert them to signal light which is transmitted via optical fiber to terminal station. In the terminal station, the signal light is received and then is time-division separated and is subjected to D/A conversion to provide the original subscriber signal. To the subscriber signal,
the telephone signal and the xDSL (x Digital Subscriber Line) signal are multiplexed,
which are then separated by a splitter and terminated in a telephone line switching device and a xDSL access multiplex device.

## Description

### FIELD OF THE INVENTION

The present invention relates to a digital subscriber optical fiber transmission system, and more particularly, relates to a digital subscriber optical fiber transmission system for transmitting a plurality of telephone signals and xDSL (x Digital Subscriber Line) signals are transmitted between a remote node and a terminal station.

### RELATED ART

DSL (Digital Subscriber Line) has been noticed as a subscriber communication system by which a wide-band data communication is possible. According to DSL, very wide-band data transmission using the existing telephone lines is possible by applying a higher wide-band modulation technique to the system. DSL is classified into various kinds by a signal speed, etc.

For example, there are SDSL (Single line Digital Subscriber Line) in which a transmission speed is same in an upstream direction and in a downstream direction and a maximum transmission speed is approximately 2 Mbps, ADSL (Asymmetric Digital Subscriber Line) in which a transmission speed is asymmetric in upstream direction and in downstream direction, a maximum transmission speed in downstream direction is approximately 8 Mbps and a maximum transmission speed in upstream direction is approximately 1 Mbps, VDSL (Very high speed Digital Subscriber Line) in which a maximum transmission speed in downstream direction of ADSL is expanded to 55 Mbps, and G lite of which system configuration is simplified by limiting a maximum transmission speed in downstream direction of ADSL to 1.5 Mbps.

These digital subscriber lines are generally called xDSL (x Digital Subscriber Line) and will be called xDSL in the description as follows. The xDSL is disclosed, for example, in "Overview of xDSL", Nikkei Communication, vol. 252, pages 74 to 100 (August, 1997).

Now, there is such big problem in the xDSL that a transmission distance is limited. For example, in case of ADSL in which a maximum transmission speed in downstream direction is 6 Mbps, the maximum transmission distance is limited to approximately 3 km, and in case of G lite in which a maximum transmission speed in downstream direction is 1.5 Mbps, the maximum transmission distance is limited to approximately 5 km.

Further, the limitation of transmission distance in actual systems will be stricter due to the influence of cross-talk from bridge taps and adjacent cables. Therefore, it is one of main tasks to be overcome how xDSL service should be implemented to subscribers who live in the places at a distance of several kilo-meters from a terminal station such as telephone station.

It has been considered to use an optical fiber transmission in combination in order to solve the problem of such transmission distance. That is, it is considered that xDSL signal is transmitted through the existing telephone line between subscriber and remote node installed near the subscriber and that the signal is transmitted through the optical fiber between the remote node and the terminal station.

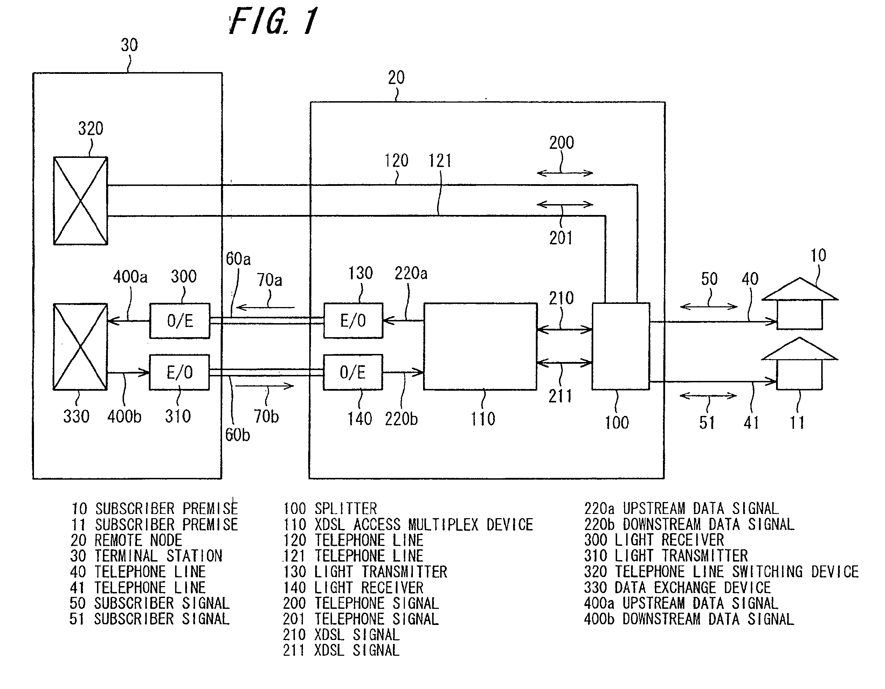

Fig. 1 is a block diagram showing configuration of conventional optical fiber transmission system. In the conventional system, the terminal station 30 and the remote node 20 are connected through the optical fibers 60a, 60b, and the remote node 20 and the subscribers 10, 11 are connected through the telephone lines 40, 41. In the remote node 20, the telephone signals 200, 201 and the xSDL signals 210, 211 are frequency separated by a splitter 100.

The telephone signals 200, 201 are sent through the telephone lines 120, 121 to the terminal station and are terminated by a telephone line switching device 320. And, the xSDL signals 210, 211 are terminated by a xDSL access multiplex device 110 installed in the remote node 20. An upstream data signal 220a which is output from the xDSL access multiplex device 110 is transmitted through the optical fiber 60a to the terminal station 30 and is input in a data exchange device 330.

A downstream data signal 400b which is output from the data exchange device 330, on the other hand, is transmitted through the optical fiber 60b to the remote node 20 and is input in the xDSL access multiplex device 110.

In the above configuration, it is important to make the remote node smaller, lighter and less consumption of electric power, because it is installed outside buildings. However, since the xSDL signal in conventional optical fiber transmission system is terminated in the remote node 20, it is necessary to accommodate various devices such as the splitter 100 or the xDSL access multiplex device 110 in the remote node 20.

Particularly, the xDSL access multiplex device 110 requires large size and much power consumption because complicated processing such as modulation and demodulation, format conversion or multiplexing of the xDSL signal is implemented to each of the subscribers. For the reason, it has been an obstacle to make the remote node 20 small size and light weight.

Further, various specifications of the xSDL exist in parallel because it is being developed rapidly, and they will be frequently modified in future. According to the conventional optical fiber transmission system, the xDSL signal is temporally terminated by the remote node 20, and therefore, where the specification of the x DSL is modified, operators have to go to the remote node to reform or exchange it each time.

And, according to the conventional optical fiber transmission system, only the xDSL signal is basically transmitted and the telephone signal is transmitted through the existing telephone line. In other words, the existing telephone line has to remain as it is, and this may become an obstacle to develop higher subscriber communication system.

### DISCLOSURE OF THE INVENTION

An object of the invention is, therefore, to achieve a subscriber optical fiber transmission system which can make a remote node small in size and light in weight.

Another object of the invention is to achieve a subscriber optical fiber transmission system which is not necessary for alternation of a remote node even if specifications of xDSL are modified.

Still another object of the invention is to achieve a subscriber optical fiber transmission system which can accommodate a xDSL signal and a telephone signal simultaneously.

A subscriber optical fiber transmission system of the first invention is characterized in that, in a subscriber communication system in which a plural subscribers are connected to a remote node through a telephone line and in which the remote node is connected through an optical fiber cable to a terminal station,
in the remote node,
a plurality of upstream subscriber signals sent through the telephone line from the subscriber are converted to a plurality of digitalized upstream subscriber signals by an analog/digital conversion circuit, a plurality of the digitalized upstream subscriber signals are time-divisionally multiplexed and are converted to multiplexed upstream subscriber signals by time-division multiplex circuit, and the multiplexed upstream subscriber signals are converted to upstream signal light by a light transmitting device, which is transmitted from the remote node through the optical fiber cable to the terminal station,
in the terminal station,
the upstream signal light is converted to multiplexed upstream subscriber signals by a light transmitting device, the multiplexed upstream subscriber signals are time-divisionally multiplexed to a plurality of digitalized upstream subscriber signals by a time-division separation circuit, and a plurality of the digitalized upstream subscriber signals are converted to a plurality of upstream subscriber signals by a digital/analog conversion circuit,
and in the terminal station,
a plurality of downstream subscriber signals sent to the subscribers are converted to a plurality of digitalized downstream subscriber signals by analog/digital conversion circuit, a plurality of the digitalized downstream subscriber signals are time-divisionally multiplexed and are converted to multiplexed downstream subscriber signals by time-division separation circuit, and the multiplexed downstream subscriber signals are converted to downstream signal light by a light transmitting device and are transmitted through the optical fiber cable to the remote node,
and in the remote node,
the downstream signal light is converted to multiplexed downstream subscriber signals by light transmitting device, the multiplexed downstream subscriber signals are time-divisionally multiplexed to a plurality of digital downstream subscriber signals by a time-division multiplex circuit, a plurality of digital downstream subscriber signals are converted to a plurality of downstream subscriber signals by digital/analog conversion circuit, and the plurality of downstream subscriber signals are transmitted from the remote node through the telephone line to subscriber.

A subscriber optical fiber transmission system of the second invention is characterized in that, in a subscriber communication system in which a plural subscribers are connected to a remote node through a telephone line and in which the remote node is connected through an optical fiber cable to a terminal station,
in the remote node,
a plurality of upstream subscriber signals sent through the telephone line from the subscriber are converted to a plurality of digitalized upstream subscriber signals by analog/digital conversion circuit, the digital upstream subscriber signals are time-divisionally multiplexed and are converted to multiplexed upstream subscriber signals by time-division multiplex circuit, and the multiplexed upstream subscriber signals are converted to upstream signal light by a light transmitting device, which is transmitted from the remote node through the optical fiber cable to the terminal station,
in the terminal station,
the upstream signal light is converted to multiplexed upstream subscriber signals by light receiving device, the multiplexed upstream subscriber signals are subjected to terminating process by digital signal processing device,
and in the remote node, the multiplexed downstream subscriber signals are output from the digital signal processing device and are converted to downstream signal light by light transmitting device, and the downstream signal light is transmitted through the optical fiber cable to the remote node,
and in the remote node,
the downstream signal light is converted to multiplexed downstream subscriber signals by light transmitting device, the multiplexed downstream subscriber signals are time-divisionally separated to digitalized downstream subscriber signals by a time-division separation circuit, a plurality of the digitalized downstream subscriber signals are converted to a plurality of downstream subscriber signals by digital/analog conversion circuit, and a plurality of downstream subscriber signals are transmitted from the remote node through the telephone line to subscriber.

A subscriber optical fiber transmission system of the third invention is characterized in that, in the subscriber optical fiber transmission system in the first and second inventions, the telephone signal and the xDSL (x Digital Subscriber Line) signal are frequency multiplexed to the upstream subscriber signals and the downstream subscriber signals.

A subscriber optical fiber transmission system of the fourth invention is characterized in that, in the subscriber optical fiber transmission system in the first invention,
the telephone signal and the xDSL (x Digital Subscriber Line) signal are frequency multiplexed to the upstream subscriber signals and the downstream subscriber signals, the terminal station has a splitter for multiplex separation of the telephone signal and the x DSL signal, a telephone line switching device for terminating process of the telephone signal, and a xDSL access multiplexing device for terminating process of the xDSL signal, the downstream telephone signal output from the telephone line switching device and the downstream xDSL signal output from the xDSL access multiplexing device, in the terminal station, are frequency multiplexed by the splitter and then are converted to downstream subscriber signals to be input in analog/digital conversion circuit, and
the upstream subscriber signals output from digital/analog conversion circuit in the terminal station are frequency separated by splitter to the upstream telephone signal and the downstream xDSL signal, which are then input in the telephone line switching device and the xDSL access multiplexing device, respectively.

A subscriber optical fiber transmission system of the fifth invention is characterized in that, in the subscriber optical fiber transmission system in the fourth invention, the upstream signals and the downstream signal are frequency multiplexed and are transmitted by a pair of cables between the splitter and the digital/analog conversion circuit or analog/digital conversion circuit, between the splitter and the telephone line switching device, and between the splitter and the xDSL access multiplexing device.

A subscriber optical fiber transmission system of the sixth invention is characterized in that, in the subscriber optical fiber transmission system in the fourth invention, the upstream signal and the downstream signal are separately transmitted by two pairs of cables between the splitter and the digital/analog conversion circuit or analog/digital conversion circuit, between the splitter and the telephone line switching device, and between the splitter and the xDSL access multiplexing device.

A subscriber optical fiber transmission system of the seventh invention is characterized in that, in the subscriber optical fiber transmission system in the first to fourth inventions, the digitalized downstream subscriber signals are obtained by analog/digital conversion of the downstream subscriber signals under the sampling rate of not less than 1 megasample/sec. and the resolution of not less than 8 bits.

A subscriber optical fiber transmission system of the eighth invention is characterized in that, in the subscriber optical fiber transmission system in the first to fourth inventions, the digitalized upstream subscriber signals are obtained by analog/digital conversion of the upstream subscriber signals under the sampling rate of not less than 250 kilosample/sec. and the resolution of not less than 8 bits.

A subscriber optical fiber transmission system of the ninth invention is characterized in that, in the subscriber optical fiber transmission system in the first to fourth inventions, the sampling rate and the resolution of the digitalized downstream subscriber signals are equal to the sampling rate and the resolution of the digitalized upstream subscriber signals.

A subscriber optical fiber transmission system of the tenth invention is characterized in that, in the subscriber optical fiber transmission system in the first to fourth inventions, the signal speed of the digitalized downstream subscriber signals are N times (N : positive integer) as large as the signal

speed of the digitalized upstream subscriber signals.

In the first subscriber optical fiber transmission system of the invention, the remote node does not carry out the termination of the subscriber signals, but only carries out the digital/analog conversion, the analog/digital conversion, the time division multiplexing and the time division separation of the subscriber signals. Accordingly, the remote node can be smaller and lighter, and the power consumption of it can be reduced. Further, the subscriber signals exchanged between the subscriber and the remote node are transmitted to the terminal station as it is. For the reason, even if the contents of the subscriber signals are changed, it can be easily supported by changing the terminal of the subscriber with the material of the terminal station without reforming the remote node.

In the second subscriber optical fiber transmission system of the invention, the subscriber signals digitalized in the terminal station are processed as the digital signal, whereby configuration of the terminal station is simplified.

In the third and fourth subscriber optical fiber transmission systems of the invention,
the telephone signal and the xDSL signal are transmitted to the terminal station, simultaneously. In the case, since the xDSL signal is terminated in the terminal station, it is not required that the xDSL access multiplexing device for terminating the xDSL signal is installed in the remote node. For the reason, the remote node can be smaller and lighter and the power consumption of it can be reduced. Further, since the telephone signal can be transmitted simultaneously, it is not required that the telephone signal is transmitted through separate lines and that a telephone line switching device for accommodating the telephone signal is installed in the remote node.

In the fifth subscriber optical fiber transmission system of the invention, configuration of the terminal station is substantially same as in the case that the telephone line is directly accommodated in the terminal station. For the reason, it is not required to change or modify the configuration and materials for the terminal station, where the system is introduced.

In the sixth subscriber optical fiber transmission system of the invention, the upstream signals and the downstream signals of the subscriber signals are transmitted through separate lines in the terminal station, respectively. For the reason, the downstream signal does not leak in the upstream signal and therefore, a hybrid trans and an echo canceller are not required.

In the seventh subscriber optical fiber transmission system of the invention, in case of analog/digital conversion of the downstream subscriber signals, the sampling rate is not less than 1 megasample/sec. and the resolution is not less than 8 bits, whereby the downstream subscriber signals can be transmitted without deterioration of its wave form, even if they are broad band signal including the xDSL signal.

In the eighth subscriber optical fiber transmission system of the invention, in case of analog/digital conversion of the upstream subscriber, the sampling rate is not less than 250 kilosample/sec. and the resolution is not less than 8 bits, whereby the upstream subscriber signals can be transmitted without deterioration of its wave form, even if they are broad band signal including the xDSL signal.

In the ninth subscriber optical fiber transmission system of the invention,
the sampling rate and the resolution in the digitization are same in the upstream subscriber signals and the downstream subscriber signals. The system is suitable for transmitting a symmetric xDSL signal such as SDSL (Single line Digital Subscriber Line) which is equal transmission rate in the upstream direction and in the downstream direction. And, a clock speed is equal in the upstream subscriber signals and in the downstream subscriber signals and therefore, synchronization therebetween is easy.

In the tenth subscriber optical fiber transmission system of the invention, the signal speed of the digitized downstream subscriber signals are N times (N : positive integer) as large as the signal speed of the digitized upstream subscriber signals. The system is suitable for transmitting an asymmetric xDSL signal such as ADSL (Asymmetric line Digital Subscriber Line) in which the transmission rate in the downstream direction is larger than the transmission rate in the downs tream direction. And, a clock speed in the upstream subscriber signals and in the downstream subscriber signals is in relation of an integral multiple and therefore, synchronization therebetween is easy.

### BRIEF DESCRIPTION OF THE DRAWINGS

Fig. 1 is a block diagram showing whole configuration of conventional subscriber optical fiber transmission system, Fig. 2 is whole configuration of the embodiment of the invention, Fig. 3 is a signal spectrum of the embodiment of the invention, Fig. 4 is the configuration of the remote node in the embodiment of the invention, Fig. 5 is the configuration of the terminal station in the embodiment of the invention, Fig. 6 is another configuration of the terminal station in the embodiment of the invention, and Fig. 7 is other configuration of the terminal station in the embodiment of the invention.

### DETAILED DESCRIPTION OF THE PREFERRED EMBODIMENTS

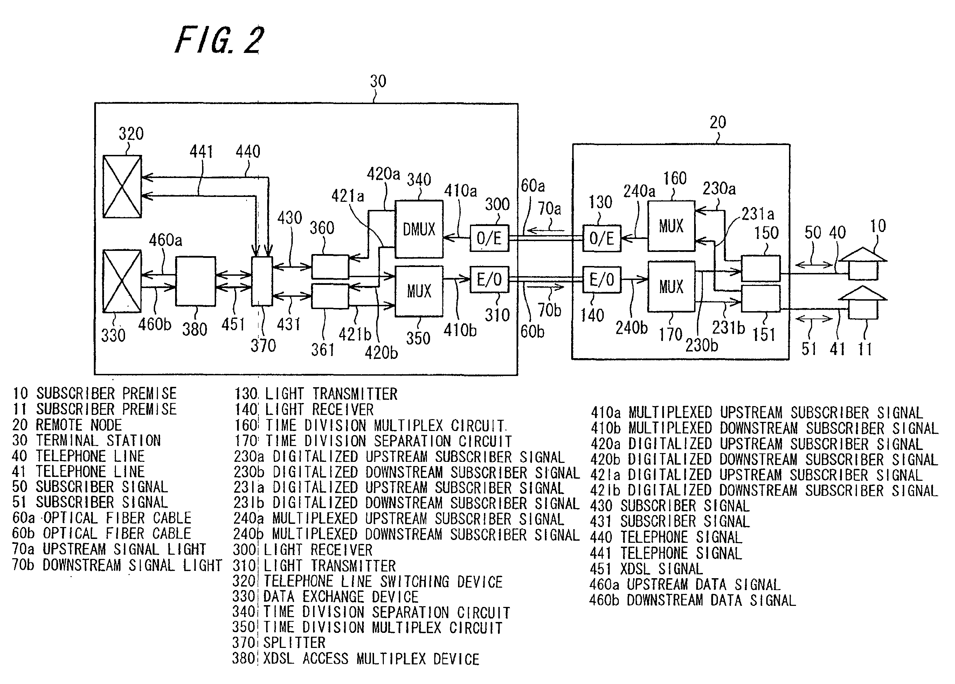

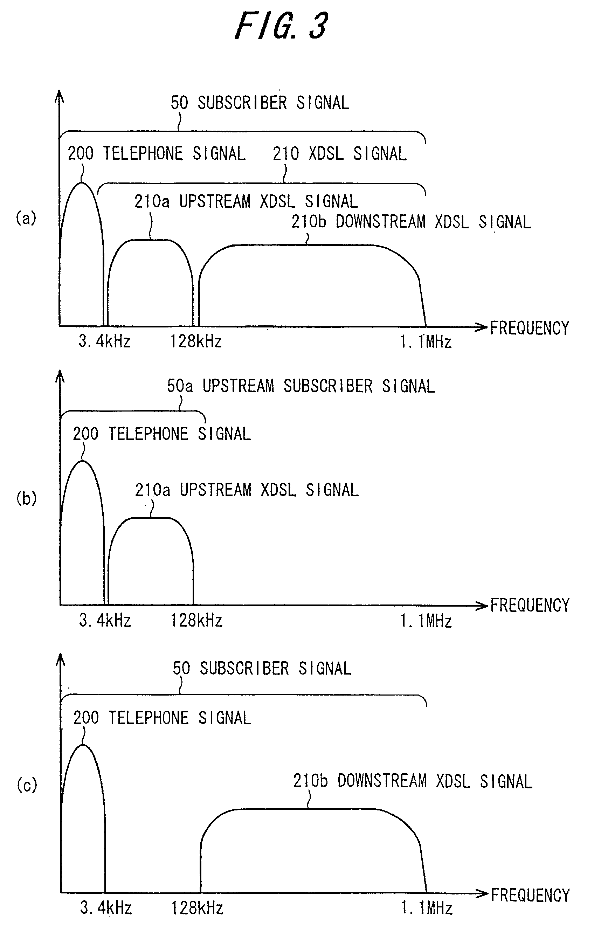

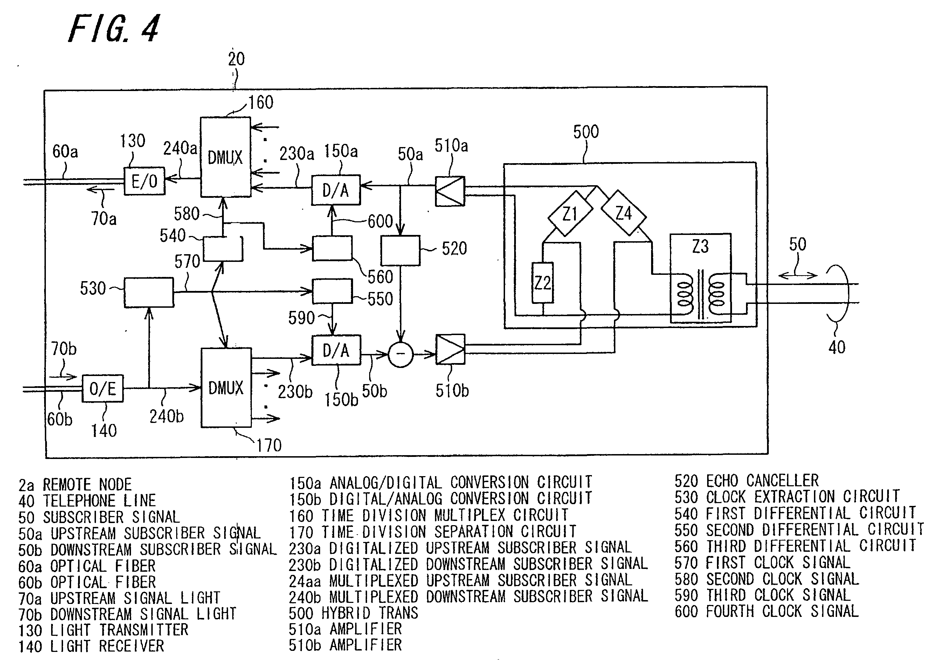

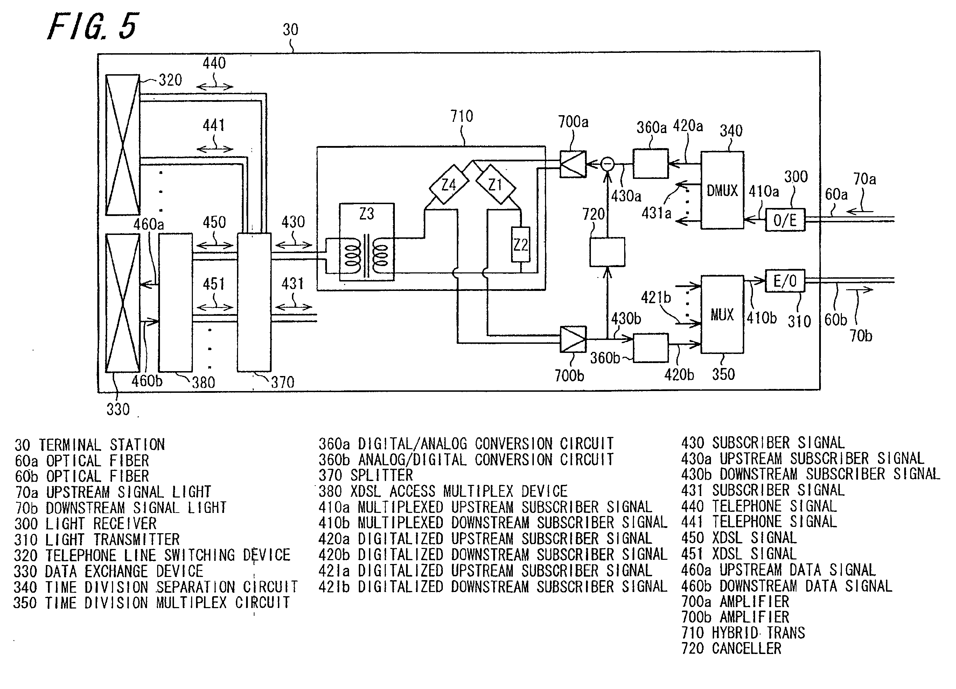

Fig. 2 is a block diagram showing the whole configuration of the embodiment of the invention. And, Fig. 3 is a signal waveform and signal spectrum of each portion in the invention, Fig. 4 is a detailed block diagram of the remote node in the invention, and Fig. 5 is a detailed block diagram of the terminal station in the invention.

In the embodiment as shown in Fig. 2, the terminal station 30 and the remote node 20 are connected through the optical fibers 60a, 60b, and the remote node 20 and the subscriber premises 10, 11 are connected through the telephone lines 40, 41. The spectrum of the subscriber signal 50 which is transmitted through the telephone line 40 is shown in Fig. 3(a).

As shown in Fig. 3(a), the telephone signal 200 and the xDSL signal 210 are frequency multiplexed in the subscriber signal 50. A frequency band of the telephone signal 200 is 300 Hz to 3.4 kHz, and the upstream signal and the downstream signal use the same frequency band. The xDSL are composed of the upstream xDSL signal 210a with the frequency band of 30 kHz to 130kHz, and the downstream xDSL signal 210b with the frequency band of 130kHz to 1.1 MHz.

The upstream xDSL signal 210a and the downstream xDSL signal 210b are modulated by DMT (Discrete Multi-Tone) system, and can transmit data of maximum signal speed of 640 kpbs and 8 Mbps, respectively.

The configuration and action of the remote node 20 will be illustrated in detail referring to Fig. 4. In the remote node 20, the subscriber signal 50 is separated to the upstream subscriber signal 50a and the downstream subscriber signal 50b by the hybrid trans 500. In the hybrid trans 500, the impedances Z1, Z2, Z3, Z4 are set so that Z1 x Z3 equals to Z2 x Z4, whereby it is prevented that the downstream subscriber signal 50b leaks through the hybrid trans 500 to the upstream subscriber signal 50a.

As shown in Fig. 3(b), the telephone signal 200 and the upstream xDSL signal 210a are frequency multiplexed in the upstream subscriber signal 50a. The upstream subscriber signal 50a, after it is amplified by the amplifier 510a, is converted to a digital signal by the analog/digital conversion circuit 150a and is output as the digitized upstream subscriber signal 230a from the analog/digital conversion circuit 150a. In the example, the resolution and the sampling rate in the analog/digital conversion are set to 8 bits and 607.5 kilosample/sec., respectively. In the case, the signal speed of the digitalized upstream subscriber signal 230a is 4.86Mbps.

The digitalized upstream subscriber signal 230a is subjected to time division multiplexing in the time division multiplex circuit with digitalized upstream subscriber signals sent from other subscriber premises and is converted to the multiplexed upstream subscriber signal 240a. In the example, the digitalized upstream subscriber signals of 30 channels to which a frame overhead and a staff bit are added are byte multiplexed in the time division multiplex circuit 160. The signal speed of the multiplexed upstream subscriber signal 240a is 155.52 Mb/s. The multiplexed upstream subscriber signal 240a is converted to the upstream signal light 70a in the light transmitter 130 and is transmitted through the optical fiber 60a to the terminal station.

On the other hand, the downstream signal light 70b sent from the terminal station through the optical fiber 60b is converted to the multiplexed downstream subscriber signal 240b by the light receiver 140 and then is separated to a plurality of the digitalized downstream signal by the time division multiplex circuit 170. In the example, the signal speed of the multiplexed downstream subscriber signal 240b is 622.08 Mb/s, and the digitalized downstream signal light 70b of 30 channels to which a frame overhead and a staff bit are added are byte multiplexed.

Each of the digitalized downstream signal is obtained by digitalizing the downstream subscriber signal by the resolution of 8 bits and the sampling speed of 2.43 megasample/sec. Its signal speed is 19.44 Mb/s. The digitized downstream signal 230b output from the time division separation circuit 170 is converted to the downstream subscriber signal 50b by the digital/analog conversion circuit 150b. As shown in Fig. 3(c), the telephone signal 200 and the downstream xDSL signal 210b are frequency multiplexed to the downstream subscriber signal 50b which is transmitted through the telephone line 40 to subscriber premises.

A part of the multiplexed downstream subscriber signal 240b output from the light receiver 140 is input in the clock extraction signal 530, in which the first clock signal 570 with a frequency of 622.08 MHz is extracted. The first clock signal 570 is input in the time division separation circuit 170. And, the first clock signal 570 is input in the first and second frequency dividers 540, 550 and the frequency thereof is divided into 1/4 and 1/256 to be converted them to the second clock signal 580 with frequency of 155.52 MHz and the third clock signal 590 with frequency of 2.43 MHz , respectively

The second clock signal 580 is input in the time division multiplex circuit 160. The third clock signal 590 is input in the digital/analog conversion circuit 150b as a sampling clock. The second clock signal 580 is divided into frequency of 1/256 in the third frequency divider 560 to be converted to the fourth clock signal 600 of which frequency is 607.5 kHz. The fourth clock signal 600 is input in the analog/digital conversion circuit 150a as a sampling clock.

In the example, it is prevented by using the echo canceller 520 that the upstream subscriber signal 50a leaks to the downstream subscriber signal 50a. The echo canceller is explained in "ISDN Technical Series, Illustration, Transmitting technology and Signal technology" edited by Tsuda et al and published by Tokyo Electric University Publishing Bureau, pages 77 to 79, in detail.

Then, the configuration and action of the terminal station 30 will be illustrated in detail referring to Fig. 5.

The upstream signal light 70a sent from the remote node 20 is converted to the multiplexed upstream subscriber signal 410a by the light receiver 300, and is time-division separated by the time division separation circuit 340 to be converted to the digitalized upstream subscriber signal of 30 channels. The digitalized upstream subscriber signal 420a output from the time division separation circuit 340 is converted to the upstream subscriber signal 430a by the digital/analog conversion circuit 360a. After the upstream subscriber signal 430a is converted to a differential signal by the amplifier 700a, it is input in the hybrid trans 710.

On the other hand, the downstream subscriber signal 430b output from the hybrid trans 710 is converted to the digitalized downstream subscriber signal 420b by the analog/digital conversion circuit 360b. The digitalized downstream subscriber signal 420b is time-division multiplexed with other digitalized downstream subscriber signal of 29 channels in the time division multiplex circuit 350 to be converted to the multiplexed downstream subscriber signal 410b and then to be converted to the downstream signal light 70b by the light transmitter 310, which is then transmitted to the remote node 20.

In the hybrid trans 710, the upstream subscriber signal 430a and the downstream subscriber signal 430b are multiplexed to obtain the subscriber signal 430.

It is prevented by using the echo canceller 720 that the downstream subscriber signal 430b leaks through the hybrid trans 710 to the upstream subscriber signal 430a. The subscriber signal 430 is separated to the telephone signal 440 and the xDSL signal 450 by the splitter 370 which are terminated in the telephone line switching device 320 and the xDSL access multiplex device 380, respectively.

According to the embodiments of the invention, the subscriber signal output from and input in the remote node 20, after the analog/digital conversion and the digital/analog conversion, is transmitted through optical fiber to the terminal station as it is. In the remote node 20, the subscriber signal is not terminated, the digital/analog conversion, the analog/digital conversion, the time division multiplexing and the time division separation are only carried out. Accordingly, the remote node 20 can be made small, light and low power consumption.

According to the embodiment of the invention, the subscriber signal is transmitted between the remote node 20 and the terminal station 30 as it is, regardless of signal form of subscriber signal such as modulation system, modulation speed or access system. Accordingly, even if the signal form of the subscriber signal is changed, it is not required to change the remote node 20.

According to the embodiment, since the telephone signal and the xDSL signal are transmitted simultaneously, it is not required to transmit the telephone signal through a separate line or to install a telephone line switching device for accommodating the telephone signal in the remote node 20.

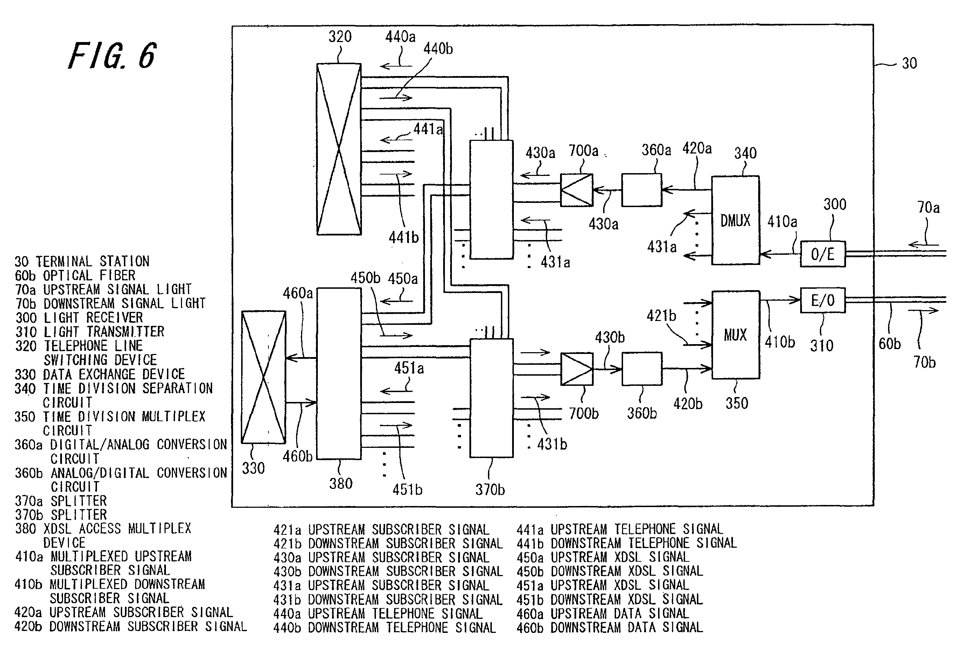

Fig. 6 is a block diagram showing another embodiment of the terminal station 30 to which the invention can be applied. In the embodiment, it is characterized that the upstream signal and the downstream line are separately transmitted using two pairs of lines in the terminal station 30.

That is, in Fig. 6, the upstream subscriber signal 420a output from the digital/analog conversion circuit 360a, after it is converted to a differential signal by the amplifier 700a, is input in the splitter 370a as it is. The upstream telephone signal 440a and the upstream xDLS signal 450a, which are output from the splitter 370a, are input, through separate pair cables, in the telephone line switching device 320 and the xDSL access multiplex device 380, respectively.

The downstream telephone signal 440b output from the telephone line switching device 320 and the downstream xDSL signal 450b output from the xDSL access multiplex device 380 are input, through separate pair cables, in the splitter 370b, respectively. Both of them get together in the splitter 370b and is input in the analog/digital conversion circuit 360b as the downstream subscriber signal 420b.

In the embodiment, since the upstream signal and the downstream signal are completely separated, the downstream subscriber signal 430b does not leak in the upstream signal 50b subscriber. For the reason, hybrid trans and echo canceller which are necessary to prevent such the leakage are not required in the invention.

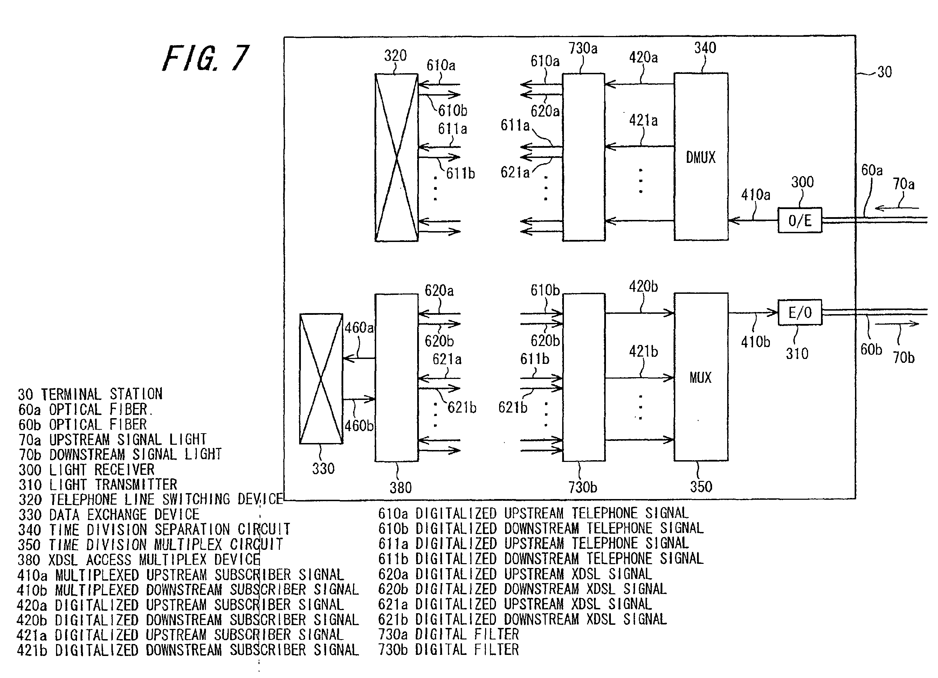

Fig. 7 is a block diagram showing still another embodiment of the terminal station 30 in the invention. In the embodiment, it is characterized that the digitalized subscriber signal is processed in the terminal station 30, without converting to analog signal, as it is.

In Fig. 7, the digitized upstream subscriber signal 420a output from the time division separation circuit 340 is separated by the digital filter 730a to the digitalized upstream telephone signal 610a and the digitalized upstream xDSL signal 620a which are output. The digitalized upstream telephone signal 610a is input in the telephone line switching device 320 as it is, and the digitalized upstream xDSL signal 620a is input in the xDSL access multiplex device 380 as it is.

On the other hand, the digitalized downstream telephone signal 610b is output from the telephone line switching device 320, and the digitalized downstream xDSL signal 620b is output from the xDSL access multiplex device 380. The digitalized downstream telephone signal 610b and the digitalized downstream xDSL signal 620b are multiplexed by the digital filter 730b to be converted to the digitalized downstream subscriber signal 420b. The other configuration is same as in the second embodiment of the invention.

In the embodiment, the configuration of the terminal station 30 is simple because the subscriber signal is processed as digital signal without converting it to analog signal.

In the examples, ADSL signal (upstream maximum frequency: 130 kHz, downstream maximum frequency: 1.1 MHz) is transmitted as xDSL signal. For the reason, the resolution of upstream analog/digital conversion and the sampling rate thereof are set to be 8 bits and 607.5 kilsample/sec. respectively, and the resolution of downstream analog/digital conversion and the sampling rate thereof are set to be 8 bits and 2.43 megasample/sec. respectively. And, the subscriber signal of 30 channels is time-division multiplexed, and the transmission rates of the upstream light and the downstream light are 155.52 MBPS and 622.08 Mbps, respectively.

However, the resolution and sampling rate in the analog/digital conversion, the number of subscriber signals to be multiplexed in the time division multiplexing, and the transmission speed of the signal light are not limited to above embodiments and examples of the invention, and can be varied corresponding to applications.

For example, considering the SDSL (Single line Digital Subscriber Line) signal transmission in which the transmission rates are same in upstream direction and in down stream direction, the sampling rate and the resolution in the upstream and downstream directions can be set to 2.43 megasample/sec. and 8 bits, respectively. In the case, however, both of the transmission rates in the upstream signal light and downstream signal light must set to 622.08 Mbps in order to transmit the subscriber signal of 30 channels which is time-division multiplexed.

### INDUSTRIAL AVAILABILITY OF THE INVENTION

According to the invention, the subscriber optical fiber transmission system can be realized which accommodates xDSL signal and telephone signal, simultaneously. And, according to the invention, the remote node can be small and light, and power consumption of it can be reduced. Further, according to the invention, it is not required that the remote node is reformed, even if specifications of the xDSL are changed.

## Claims

1. A digital subscriber optical fiber transmission system comprising a subscriber communication system in which a plurality of subscriber premises and a remote node are connected to each other through a telephone line and the remote node is connected through an optical fiber cable to a terminal station, said remote node comprising
a means for converting a plurality of upstream subscriber signals sent through a telephone line from the subscriber premises to a plurality of digitalized upstream subscriber signals by an analog/digital conversion circuit,
a means for time-division multiplexing a plurality of the digitalized upstream subscriber signals by time-division multiplex circuit to convert it to multiplexed upstream subscriber signals,
a means for converting, by a light transmitter, the multiplexed upstream subscriber signals to upstream signal light which is then transmitted through the optical fiber cable to the terminal station,
a means for converting downstream subscriber signals sent from the terminal station to multiplexed downstream subscriber signals by a light receiver,
a means for time-division separating the multiplexed downstream subscriber signals to a plurality of the digitalized downstream subscriber signals by time-division separation circuit,
a means for converting a plurality of the separated and digitalized downstream subscriber signals to a plurality of downstream subscriber signals by a digital/analog conversion circuit, and
a means for transmitting a plurality of the downstream subscriber signals through the telephone line to the subscriber premises, and
said terminal station comprising
a means for converting the upstream signal light to the multiplexed upstream subscriber signals by a light receiver,
a means for time-division separating the multiplexed upstream subscriber signals to a plurality of the digitalized upstream subscriber signals by a time division separation circuit,
a means for converting a plurality of the separated and digitalized upstream subscriber signals to a plurality of upstream subscriber signals by the digital/analog conversion circuit,
a means for converting a plurality of the downstream subscriber signals sent to a plurality of the subscriber premises to a plurality of the digital downstream subscriber signals by the analog/digital conversion circuit,
a means for time-division multiplexing a plurality of the digitalized downstream subscriber signals by the time division multiplexing circuit to convert it to the multiplexed downstream subscriber signals, and
a means for converting the multiplexed downstream subscriber signals by the light transmitter to the downstream signal light which is then transmitted through the optical fiber cable to the remote node.

2. A digital subscriber optical fiber transmission system comprising a subscriber communication system in which a plurality of subscriber premises and a remote node are connected to each other through a telephone line and the remote node is connected through an optical fiber cable to a terminal station, said remote node comprising
a means for converting a plurality of upstream subscriber signals transmitted through a telephone line from the subscriber premises to a plurality of digitalized upstream subscriber signals by an analog/digital conversion circuit,
a means for time-division multiplexing a plurality of the digitalized upstream subscriber signals by time-division multiplex circuit to convert it to multiplexed upstream subscriber signals,
a means for converting, by a light transmitter, the multiplexed upstream subscriber signals to upstream signal light which is then transmitted through the optical fiber cable to the terminal station,
a means for converting downstream subscriber signals sent from the terminal station to multiplexed downstream signals by a light receiver,
a means for time-division separating the multiplexed downstream subscriber signals to a plurality of the digitalized downstream subscriber signals by time-division separation circuit,
a means for converting a plurality of the separated and digitalized downstream subscriber signals to a plurality of downstream subscriber signals by a digital/analog conversion circuit, and
a means for transmitting a plurality of the downstream subscriber signals through the telephone line to the subscriber premises, and
said terminal station comprising
a means for converting the upstream signal light to the multiplexed upstream subscriber signals by a light receiver,
a means for terminating the multiplexed upstream subscriber signals by a digital signal processing device, and
a means for converting the multiplexed downstream subscriber signals output from the digital signal processing device, by the light transmitter, to the downstream signal light which is then transmitted through the optical fiber cable to the remote node.

3. The subscriber optical fiber transmission system according to Claim 1 or 2, wherein a telephone signal and a xDSL (x Digital Subscriber Line) signal are frequency multiplexed to the upstream subscriber signals and the downstream subscriber signals.

4. The subscriber optical fiber transmission system according to Claim 1, wherein
a telephone signal and a xDSL (x Digital Subscriber Line) signal are frequency multiplexed to the upstream subscriber signals and the downstream subscriber signals,
the terminal station has a splitter for multiplex separation of the telephone signal and the xDSL signal, a telephone line switching device for terminating process of the telephone signal, and a xDSL access multiplexing device for terminating process of the xDSL signal,
the downstream telephone signal output from the telephone line switching device and the downstream xDSL signal output from the xDSL access multiplexing device, in the terminal station, are frequency multiplexed by the splitter and then are converted to the downstream subscriber signals to be input in the analog/digital conversion circuit,
and
the upstream subscriber signals output from the digital/analog conversion circuit in the terminal station is frequency separated by the splitter to the upstream telephone signal and the downstream xDSL signal, each of which is then input in the telephone line switching device and the xDSL access multiplexing device, respectively.

5. The subscriber optical fiber transmission system according to Claim 4, wherein
the splitter is respectively connected to the digital/analog conversion circuit or analog/digital conversion circuit, the telephone line switching device, and the xDSL access multiplexing device by a pair of cables for transmitting the frequency multiplexed upstream and downstream signals.

6. The subscriber optical fiber transmission system according to Claim 4, wherein
the splitter is respectively connected to the digital/analog conversion circuit or analog/digital conversion circuit, the telephone line switching device, and the xDSL access multiplexing device by two pairs of cables for transmitting the frequency multiplexed upstream and downstream signals separately.

7. The subscriber optical fiber transmission system according to Claim 1, 2, 3 or 4, wherein the digitalized downstream subscriber signals are obtained by the analog/digital conversion of the downstream subscriber signals under the sampling rate of not less than 1 megasample/sec. and the resolution of not less than 8 bits.

8. The subscriber optical fiber transmission system according to Claim 1, 2, 3 or 4, wherein the digitized upstream subscriber signals are obtained by the analog/digital conversion of the upstream subscriber signals under the sampling rate of not less than 250 kilosample/sec. and the resolution of not less than 8 bits.

9. The subscriber optical fiber transmission system according to Claim 1, 2, 3 or 4, wherein the sampling rate and the resolution of the digitalized downstream subscriber signals are equal to the sampling rate and the resolution of the digitized upstream subscriber signals.

10. The subscriber optical fiber transmission system according to Claim 1, 2, 3 or 4, wherein the signal speed of the digitalized downstream subscriber signals is N times (N : positive integer) as large as the signal speed of the digitalized upstream subscriber signals.
